(19) Europäisches Patentamt
European Patent Office
Office européen des brevets

(11) Numéro de publication : **0 176 456**
**B1**

# (12) FASCICULE DE BREVET EUROPÉEN

(45) Date de publication du fascicule du brevet : **30.08.89**

(51) Int. Cl.[4] : **C 07 F 9/40**

(21) Numéro de dépôt : **85420165.4**

(22) Date de dépôt : **11.09.85**

## (54) Procédé de préparation de O alcoyle S (alcoyle ramifié en alpha) alcoyl phosphonothioate.

(30) Priorité : **14.09.84 FR 8414319**

(43) Date de publication de la demande :
**02.04.86 Bulletin 86/14**

(45) Mention de la délivrance du brevet :
**30.08.89 Bulletin 89/35**

(84) Etats contractants désignés :
**AT BE CH DE FR GB IT LI LU NL SE**

(56) Documents cités :
**FR-A- 2 516 517**
**US-A- 4 362 723**

(73) Titulaire : **RHONE-POULENC AGROCHIMIE**
**14-20, rue Pierre Baizet**
**F-69009 Lyon (FR)**

(72) Inventeur : **Brochard, Jean-Michel**
**3, rue Blanche**
**F-94140 Alfortville (FR)**
Inventeur : **Gough, Stanley Thomas Derek**
**91, Chalkwell Esplanade**
**Westcliff-on-the-Sea Essex, SS0-8LN (GB)**

(74) Mandataire : **Chrétien, François et al**
**RHONE-POULENC AGROCHIMIE- DPI B.P. 9163**
**F-69263 Lyon Cédex 09 (FR)**

**EP 0 176 456 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un nouveau procédé de préparation de O-alcoyle S-(alcoyle ramifié en alpha) alcoyl phosphonothioates. Certains de ces composés sont connus pour leurs intéressantes propriétés insecticides et nématicides utilisables pour la protection des cultures.

L'USP 4 362 723 décrit la préparation de composés S-aryl S(tertioalcoyl) phosphonodithioates par réaction d'un halogénure d'acide S(tertioalcoyl) phosphonothioïque avec un mercaptan en présence d'une base selon le schéma :

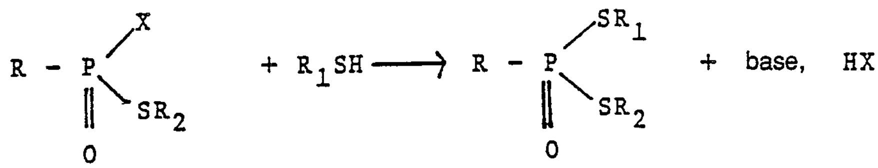


Ce brevet décrit la préparation de composés différents de ceux selon l'invention, puisqu'il s'agit de composés contenant deux atomes de soufre au lieu d'un, et que le premier réactif contient déjà un atome de soufre.

Lorsque cette technique connue est appliquée à la préparation de dérivés phosphonomonothioates, les rendements sont faibles ou nuls.

La demande française 2 516 517 concerne la préparation de composés O-alcoyl-S(tertioalcoyl) alcoylphosphonomonothioates par réaction d'un halogénure d'un acide S-(tertioalcoyle) alcoyl-phosphonothioïque sur un alcool ou phénol en présence d'une base, selon le schéma :

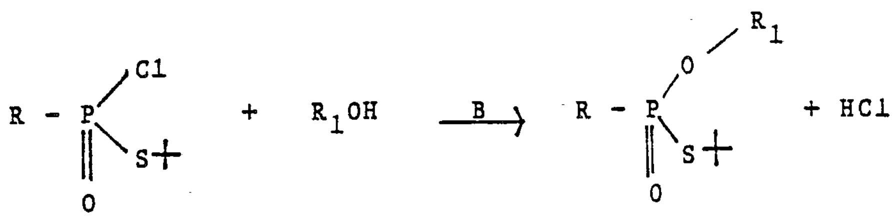

Il est connu, d'après le brevet américain 4 428 945, de préparer ce type de composé par condensation d'un halogénure d'acide S-(alcoyle tertiaire) alcoylphosphonothioïque et d'un alcool en présence d'une base.

Ce procédé s'effectue avec un rendement d'environ 70 % mais permet d'obtenir les produits considérés à l'aide d'un procédé global en quatre étapes à partir d'un trialcoylphosphite.

La présente invention a pour objet un nouveau procédé de préparation de ces produits utilisables comme dernière étape d'un procédé global en trois étapes, donc simplifié et plus facile à mettre en œuvre à l'échelle industrielle.

L'invention concerne donc un procédé de préparation d'un O-alcoyle S-(alcoyle ramifié en alpha) alcoylphosphonothioate de formule :

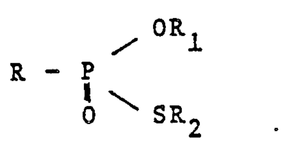

dans laquelle

R est un alcoyle de 1 à 8, et de préférence de 1 à 4, atomes de carbone,

$R_1$ est un alcoyle de 1 à 8, et de préférence de 1 à 4, atomes de carbone,

$R_2$ est un alcoyle ramifié en alpha de 3 à 8, et de préférence 4 ou 5 de préférence alcoyle tertiaire, atomes de carbone, caractérisé en ce qu'on fait réagir un halogénure d'acide O-alcoyl alcoylephosphonique avec un (alcoyl ramifié en alpha) mercaptan, selon le schéma :

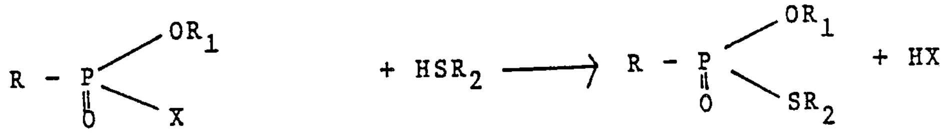

dans laquelle R, $R_1$ et $R_2$ ont les significations indiquées ci-dessus et X est un atome d'halogène, de

préférence de chlore ou de brome, en milieu organique, en présence d'un accepteur d'acide et d'une quantité minoritaire d'une base auxiliaire.

La réaction est avantageusement effectuée à une température comprise entre 0 °C et 100 °C. D'une manière générale, une température élevée ne favorise pas un bon rendement, c'est pourquoi on travaille de préférence entre 15-50 °C et par commodité à température ambiante.

L'accepteur d'acide peut être une base organique forte comme une amine tertiaire, telle qu'une trialcoylamine, par exemple la triéthylamine ou l'éthyldiisopropylamine ou une pyridine telle que la pyridine et la diméthylaminopyridine. Cette base organique est utilisée avantageusement en quantité sensiblement stœchiométrique.

L'accepteur d'acide selon l'invention doit être associé à une quantité minoritaire de base auxiliaire.

La base auxiliaire, associée à raison de 0,5 à 15 % et de préférence de 1 à 10 %, est une base organique d'un $pk_a$ au moins égal à celui de la diméthylamino-pyridine et différente de la première. On peut notamment utiliser à cet effet une dialcoyl- ou alcoylèneaminopyridine, l'ensemble de la partie alcoyle contenant de 1 à 6 atomes de carbone, et en particulier la pyrrolidino-4 pyridine et de préférence la diméthylamino-4 pyridine.

Comme solvants organiques convenables on peut citer des hydrocarbures aliphatiques tels que cyclohexane, éventuellement chlorés comme le chlorure de méthylène des cétones telles que la butan-2 one, des solvants aromatiques tels que benzène, toluène, xylène.

De préférence et par commodité, on effectue la réaction dans un excès de l'alcoylmercaptan utilisé comme réactif et qui sert en plus de solvant.

Le procédé selon l'invention présente l'avantage de pouvoir donner un rendement important alors que, pour ce type de réaction, les résultats antérieurs sont faibles et sans intérêt industriel.

Cette réaction dans de bonnes conditions ouvre de plus la voie à l'obtention de O alcoyl S (alcoyl ramifié en alpha) alcoylphosphonothioates à partir d'un trialcoylphosphite selon un processus simplifié, en trois étapes dont les deux premières sont en soi connues :

1) Isomérisation d'un trialcoyl phosphite en O,O-dialcoyl alcoyl phosphonate selon le schéma :

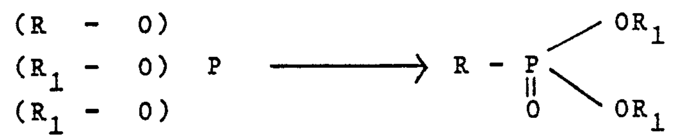

dans lequel R et $R_1$, identiques ou différents sont un alcoyle de 1 à 4 atomes de carbone.

Cette réaction s'effectue, de manière en soi connue par chauffage à une température de 150 à 210 °C, sous azote, en présence d'iode ou de iodure d'alcoyle.

2) Halogénation du O,O-dialcoyl alcoyl phosphonate selon le schéma :

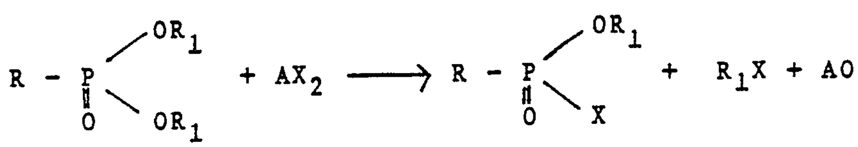

dans lequel

R et $R_1$ ont les mêmes significations que ci-dessus,

$AX_2$ est un agent d'halogénation dans lequel X représente un atome d'halogène, de préférence le chlore ou le brome et A un groupe SO ou CO.

Cette réaction s'effectue à des températures allant de 40 à 150 °C en présence de solvant et d'un catalyseur de préférence azoté comme par exemple une amine tertiaire ou un amide NN dialcoylé (notamment diméthylformamide) éventuellement sous pression.

3) Condensation (réaction selon l'invention)

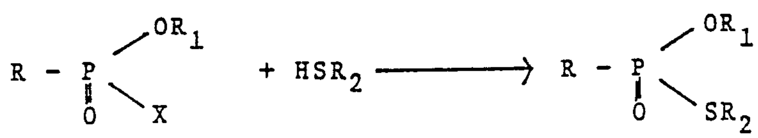

dans les conditions indiquées ci-dessus.

Ce procédé présente l'avantage de donner les produits finaux avec un rendement global satisfaisant à l'échelle industrielle. En conséquence l'utilisation du procédé selon l'invention dans ce processus global fait également partie de l'invention.

Les exemples suivants sont donnés à titre indicatif mais non limitatif pour illustrer l'invention.

Exemple 1

Préparation du O-éthyl-S tertiobutyl éthyl phosphonothioate.

On coule en une seule fois dans un réacteur de 1 litre, 154,5 g (1 mole) de chlorure de l'acide O-éthyle éthyl phosphonothioïque et 3,3 g (0,03 mole) de diméthylaminopyridine sur 270 g (3 moles) de tertiobutylmercaptan. On coule ensuite lentement, pendant environ 1 heure, 121,2 g (1,2 mole) de triéthylamine tout en refroidissant à une température comprise entre 0 et 20 °C. A la fin de la coulée, on maintient, sous agitation, le milieu réactionnel à 20 °C environ pendant 4 heures. La réaction est alors complète (rendement supérieur à 95 %).

On lave le milieu avec 100 ml d'acide chlorhydrique N puis on décante la phase aqueuse. On lave une nouvelle fois avec de l'eau et décante à nouveau. La phase organique est alors évaporée sous vide. On obtient le O-éthyl S-tertiobutyle éthylphosphonothioate avec une pureté de 94 % et un rendement total de 80 % en mole par rapport au chlorure de départ.

La caractérisation du produit obtenu est effectuée par chromatographie en phase vapeur.

Exemples 2 à 4

En opérant comme à l'exemple 1 mais en remplaçant la triéthylamine par l'éthyldiisopropylamine et en modifiant la quantité de catalyseur (diméthylaminopyridine) et/ou la température et/ou le solvant, on obtient le même produit dans les conditions et avec les résultats consignés dans le tableau ci-après.

| n° | % en mole cata / réactif | Rapport molaire amine/réactif | Tert Bu-SH rapport molaire/réactif | Solvant | Température °C | Durée en heure | Rendement % en mole |
|---|---|---|---|---|---|---|---|
| 2 | 10 | 1 | 2 | $CH_2Cl_2$ | 22 | 72 | 84 |
| 3 | 1 | 1,1 | 2 | $CH_2Cl_2$ | 46 (reflux) | 6 | 70 |
| 4 | 3 | 2,2 | 2 | tert-Bu SH | 22 | 24 | 78 |

## Revendications

1. Procédé de préparation d'un O-alcoyle S-(alcoyle ramifié en alpha)-alcoylphosphonothioate de formule :

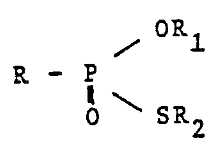

dans laquelle

R est un alcoyle de 1 à 8 atomes de carbone,

$R_1$ est un alcoyle de 1 à 8 atomes de carbone,

$R_2$ est un alcoyle ramifié en alpha de 3 à 8 atomes de carbone, par réaction d'un halogénure d'acide O-alcoyl-alcoyle-phosphonique avec un alcoyl (ramifié en alpha) mercaptan, selon le schéma.

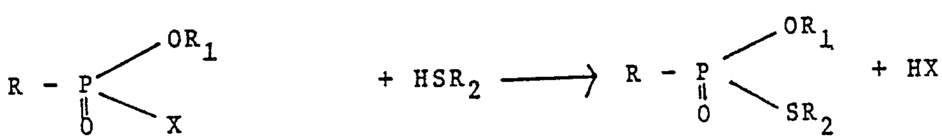

dans laquelle R, $R_1$ et $R_2$ ont les significations indiquées ci-dessus et X est un atome d'halogène, en milieu organique, en présence d'un accepteur d'acide caractérisé en ce que la réaction est effectuée également en présence d'une base auxiliaire différente de l'accepteur d'acide, à raison de 0,5 à 15 % en mole de l'halogénure de départ.

2. Procédé selon la revendication 1, caractérisé en ce que, dans le schéma réactionnel R et $R_1$ sont chacun un alcoyle de 1 à 4 atomes de carbone.

3. Procédé selon la revendication 1 caractérisé en ce que $R_2$ est un alcoyle tertiaire de 4 ou 5 atomes de carbone.

4. Procédé selon la revendication 1 caractérisé en ce que X est un atome de chlore.

5. Procédé selon l'une des revendications 1 à 4, caractérisé en ce que l'accepteur d'acide est une base organique.

6. Procédé selon la revendication 5, caractérisé en ce que l'accepteur d'acide est la triéthylamine.

7. Procédé selon la revendication 4, caractérisé en ce que la base auxiliaire est un dérivé dialcoyl- ou alcoylène-amino-4 pyridine.

8. Procédé selon la revendication 7, caractérisé en ce que la base auxiliaire est la diméthylaminopyridine.

9. Procédé selon l'une des revendications 1 à 8, caractérisé en ce que la réaction est effectuée dans un solvant organique.

10. Procédé selon l'une des revendications 1 à 9, caractérisé en ce que la réaction est effectuée dans un excès de l'alcoylmercaptan réactif.

11. Utilisation du procédé selon l'une des revendications 1 à 10 caractérisée en ce que le procédé constitue la dernière étape d'un procédé comprenant les étapes suivantes :

1) isomérisation

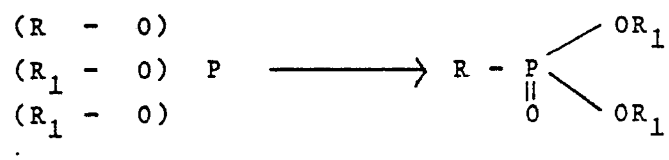

2) halogénation

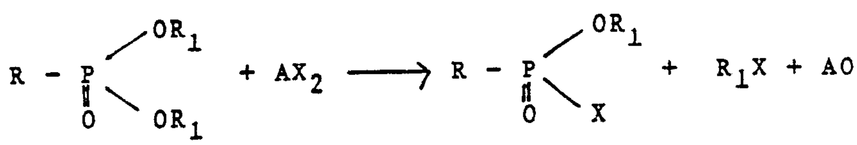

dans laquelle X est un atome d'halogène de préférence brome ou chlore, et A un groupe SO ou CO.

3) réaction selon les revendications 1 à 10.

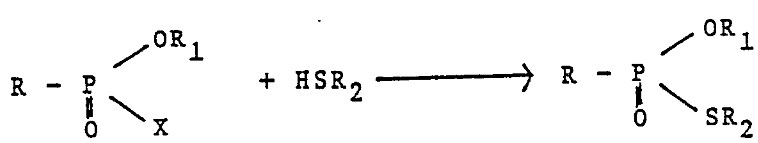

## Claims

1. A process for preparing an O-alkyl S-(alphabranched alkyl) alkylphosphonothioate of the general formula :

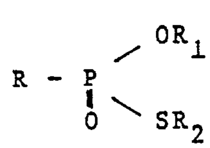

wherein

R represents an alkyl group having from 1 to 8 carbon atoms,

$R_1$ represents an alkyl group having 1 to 8 carbon atoms, and

$R_2$ is an alpha-branched alkyl group having from 3 to 8 carbon atoms, which process comprises the reaction of an O-(alkyl)-alkylphosphonic acid halide with an (alpha-branched alkyl) mercaptan according to the schema.

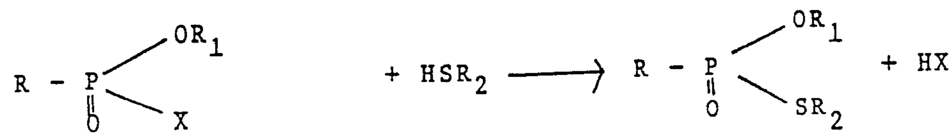

wherein R, $R_1$ and $R_2$ are as hereinbefore defined and X represents a halogen atom, in an organic medium wherein the reaction is carried out also in the presence of an auxiliary base different from the acid acceptor in an amount of 0,5 to 15 % mol. relative to the starting acid halide.

2. A process according to claim 1, wherein R and $R_1$ each represent an alkyl group having from 1 to 4 carbon atoms.

3. A process according to claim 1 or 2, wherein $R_2$ represents a tertiary alkyl group having 4 or 5 carbon atoms.

4. A process according to claim 1, wherein X represents a chlorine atom.

5. A process according to any one of claims 1 to 4, wherein the acid acceptor is a strong organic base.

6. A process according to claim 5, wherein the acid acceptor is triethylamine.

7. A process according to any one of the preceding claims, wherein the auxiliairy base is a dialkyl-or alkylene-4-aminopyridine.

8. A process according to claim 7, wherein the auxiliary base is 4-dimethylaminopyridine.

9. A process according to any one of claims 1 to 8, wherein the reaction is performed in an organic solvent.

10. A process according to any one of claims 1 to 9, wherein the reaction is performed in an excess of the reagent alkyl mercaptan.

11. A use of the process according to any one of claims 1 to 10 wherein the process is the last step of a process which comprises :

(A) the isomerisation of a trialkyl phosphite to an O,O-dialkyl alkylphosphonate according to the scheme :

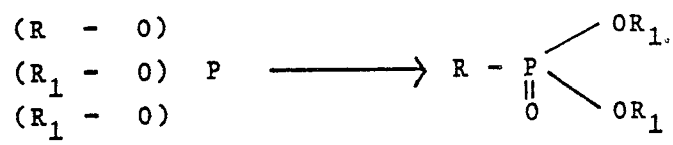

(B) halogenation of the O,O-dialkyl alkylphosphonate according to the scheme :

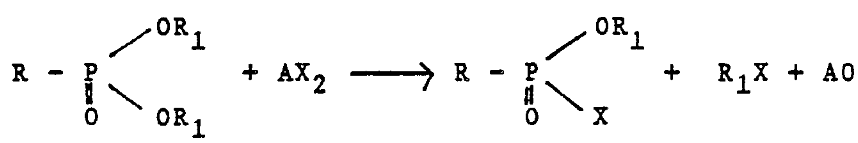

wherein R and $R_1$ are as defined in claim 1, X represents a halogen atom and A represents an SO or CO group and

(C) the reaction of an O-(alkyl) alkylphosphonic halide wherein R, $R_1$ and X are as hereinbefore defined with an (alpha-branched alkyl) mercaptan of the general formula $HSR_2$, wherein $R_2$ is as hereinbefore defined, in accordance with the process claimed in any one of claims 1 to 10.

## Patentansprüche

1. Verfahren zur Herstellung von O-Alkyl-S-(α-verzweigtes alkyl)-alkylphosphonothioaten der Formel :

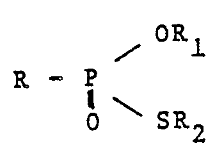

in der bedeuten

R $C_{1-8}$-Alkyl,

$R_1$ $C_{1-8}$-Alkyl,

$R_2$ α-verzweigtes $C_{3-8}$-Alkyl,

durch Umsetzung eines O-Alkyl-alkylphosphonsäurehalogenids mit einem α-verzweigten Alkylmercaptan gemäß folgendem Schema :

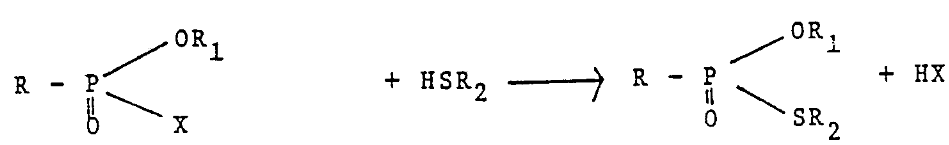

wobei R, $R_1$ und $R_2$ die oben angegebene Bedeutung haben und X Halogen ist, in einem organischen Medium in Gegenwart eines Säureakzeptors dadurch gekennzeichnet, daß die Umsetzung ebenso in Gegenwart einer Hilfsbase, die vom Säureakzeptors verchieden ist, in einer Menge von 0,5 bis 15 mol % bezogen auf das eingesetzte Halogenid durchgeführt ist.

2. Verfahren nach Anspruch 1, dadurch gekennzeichnet, daß in dem Umsetzungsschema R und $R_1$ je ein $C_{1-4}$-Alkyl ist.

3. Verfahren nach Anspruch 1, dadurch gekennzeichnet, daß $R_2$ ein tertiäres Alkyl mit 4 oder 5 Kohlenstoffatomen ist.

4. Verfahren nach dem Anspruch 1, dadurch gekennzeichnet, daß X Chlor ist.

5. Verfahren nach einem der Ansprüche 1 bis 4, dadurch gekennzeichnet, daß als Säureakzeptor eine organische Base verwendet wird.

6. Verfahren nach einem der Ansprüche 1 bis 5, dadurch gekennzeichnet, daß als Säureakzeptor Triethylamin verwendet wird.

7. Verfahren nach dem Anspruch 4, dadurch gekennzeichnet, daß als Hilfsbase ein Dialkyl- oder Alkylenamino-4-pyridin verwendet wird.

8. Verfahren nach Anspruch 7, dadurch gekennzeichnet, daß als Hilfsbase Dimethylamino-4-pyridin verwendet wird.

9. Verfahren nach einem der Ansprüche 1 bis 8, dadurch gekennzeichnet, daß die Umsetzung in einem organischen Lösungsmittel durchgeführt wird.

10. Verfahren nach einem der Ansprüche 1 bis 9, dadurch gekennzeichnet, daß die Umsetzung in einem Überschuß des als Reaktionsteilnehmer verwendeten Alkylmercaptans durchgeführt wird.

11. Anwendung des Verfahrens gemäß einem der Ansprüche 1 bis 10 als Letzte Stufe eines Verfahrens mit folgenden Stufen :

1. Isomerisierung gemäß folgendem Schema :

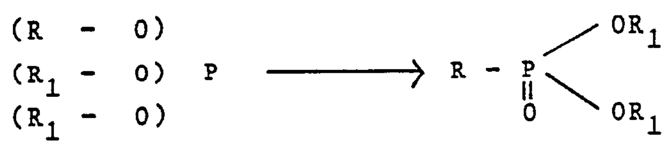

2. Halogenierung gemäß folgendem Schema :

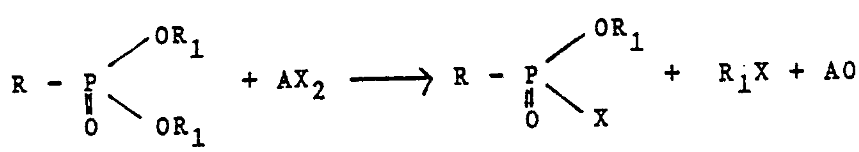

wobei X Halogen und vorzugsweise Brom oder Chlor und A SO oder CO ist,

3. Kondensation gemäß Anspruch 1